# EUROPEAN PATENT APPLICATION

(11) **EP 4 810 676 A1**
(43) Date of publication of application: **23.09.2026**
(21) Application number: 24891061.4
(22) Date of filing: 03.09.2024
(51) Int. Cl.: D01F 6/92, C08L 67/04, C08L 101/16, D01F 6/62

(54) **RESIN COMPOSITION FOR POLY(3-HYDROXYALKANOATE)-BASED FIBER, FIBER, AND METHOD FOR MANUFACTURING SAME**

(30) Priority: 14.11.2023 JP 2023193596
(71) Applicant: KANEKA CORPORATION, Osaka-shi, Osaka 530-8288 (JP)
(72) Inventor: MUKAI, Ryutaro, Osaka 566-0072 (JP); OKURA, Tetsuo, Osaka 566-0072 (JP)
(74) Representative: Vossius & Partner Patentanwälte Rechtsanwälte mbB
(86) International application number: PCT/JP2024/031578
(87) International publication number: WO 2025/105018

(57) **Abstract**

The present invention provides, for example, a resin composition for a poly(3-hydroxyalkanoate) fiber, the resin composition being intended for fabricating a poly(3-hydroxyalkanoate) resin-containing fiber having excellent toughness. The present invention is, for example, a resin composition for a poly(3-hydroxyalkanoate) fiber, including: a poly(3-hydroxyalkanoate) resin (A) having a weight-average molecular weight ranging from 200,000 to 700,000; and a poly(3-hydroxyalkanoate) resin (B) having a weight-average molecular weight ranging from 400,000 to 1,400,000, wherein: the weight-average molecular weight of the poly(3-hydroxyalkanoate) resin (B) is greater than the weight-average molecular weight of the poly(3-hydroxyalkanoate) resin (A) by at least 200,000; and a content of the poly(3-hydroxyalkanoate) resin (A) is greater than a content of the poly(3-hydroxyalkanoate) resin (B).

## Description

### Technical Field

The present invention relates to a resin composition for a poly(3-hydroxyalkanoate) fiber, a fiber, and a method for producing the same.

### Background Art

In recent years, biodegradable plastics have been actively developed as materials that can solve problems caused by plastic wastes, i.e., the problems that result in burdens on the global environment, such as harmful effects on ecosystems, generation of harmful gas during combustion of the plastic wastes, and global warming due to a large amount of heat generated by the combustion of the plastic wastes.

Among biodegradable plastics, in terms of biodegradability and carbon neutrality, biodegradable plastics that are microbially produced using plant-derived raw materials as carbon sources, in particular aliphatic polyester resins, are attracting attention. Attention has been directed particularly to poly(3-hydroxyalkanoate) resins, such as poly(3-hydroxybutyrate) homopolymer resins, poly(3-hydroxybutyrate-co-3-hydroxyvalerate) copolymer resins, poly(3-hydroxybutyrate-co-3-hydroxyhexanoate) copolymer resins, and poly(3-hydroxybutyrate-co-4-hydroxybutyrate) copolymer resins.

Patent Literature 1 discloses a melt-blown nonwoven fabric formed from a fiber containing a poly(3-hydroxyalkanoate) resin.

Patent Literature 2 discloses a poly(3-hydroxyalkanoate) composition used in forming methods, such as melt spinning.

### Citation List

### Patent Literature

PTL 1: WO 2023/106231
PTL 2: Japanese Laid-Open Patent Application Publication No. 2004-331757

### Summary of Invention

### Technical Problem

There are cases where fibers are required to have excellent toughness. However, sufficient studies have not yet been conducted on resin compositions for poly(3-hydroxyalkanoate) fibers, the resin compositions being intended for fabricating poly(3-hydroxyalkanoate) resin-containing fibers having excellent toughness.

In view of the above, a problem to be solved by the present invention is to provide a resin composition for a poly(3-hydroxyalkanoate) fiber, the resin composition being intended for fabricating a poly(3-hydroxyalkanoate) resin-containing fiber having excellent toughness, and to provide a fiber including the resin composition for a poly(3-hydroxyalkanoate) fiber.

### Solution to Problem

The inventors of the present invention conducted diligent studies to solve the above-described problem. As a result of the studies, they have found that when a poly(3-hydroxyalkanoate) resin (A) having a weight-average molecular weight ranging from 200,000 to 700,000 and a poly(3-hydroxyalkanoate) resin (B) having a weight-average molecular weight ranging from 400,000 to 1,400,000 are included in a fiber at a predetermined content ratio, and the weight-average molecular weight of the poly(3-hydroxyalkanoate) resin (B) is greater than the weight-average molecular weight of the poly(3-hydroxyalkanoate) resin (A) by at least a predetermined value, the fiber has excellent toughness. Based on this finding, the inventors of the present invention arrived at the present invention.

Specifically, the present invention relates to a resin composition for a poly(3-hydroxyalkanoate) fiber, including: a poly(3-hydroxyalkanoate) resin (A) having a weight-average molecular weight ranging from 200,000 to 700,000; and a poly(3-hydroxyalkanoate) resin (B) having a weight-average molecular weight ranging from 400,000 to 1,400,000, wherein: the weight-average molecular weight of the poly(3-hydroxyalkanoate) resin (B) is greater than the weight-average molecular weight of the poly(3-hydroxyalkanoate) resin (A) by at least 200,000; and a content of the poly(3-hydroxyalkanoate) resin (A) is greater than a content of the poly(3-hydroxyalkanoate) resin (B).

The present invention also relates to a fiber including a resin composition for a poly(3-hydroxyalkanoate) fiber, the resin composition including a poly(3-hydroxyalkanoate) resin (A) having a weight-average molecular weight ranging from 200,000 to 700,000 and a poly(3-hydroxyalkanoate) resin (B) having a weight-average molecular weight ranging from 400,000 to 1,400,000, wherein: the weight-average molecular weight of the poly(3-hydroxyalkanoate) resin (B) is greater than the weight-average molecular weight of the poly(3-hydroxyalkanoate) resin (A) by at least 200,000; and a content of the poly(3-hydroxyalkanoate) resin (A) is greater than a content of the poly(3-hydroxyalkanoate) resin (B).

The present invention further relates to a method for producing a fiber by melt spinning, the method including the steps of: (A) obtaining a raw filament by discharging a molten product of the above-described resin composition for a poly(3-hydroxyalkanoate) fiber through a discharge hole; (B) cooling the raw filament; and (C) obtaining the fiber by drawing the cooled raw filament.

### Advantageous Effects of Invention

The present invention makes it possible to provide a resin composition for a poly(3-hydroxyalkanoate) fiber, the resin composition being intended for fabricating a poly(3-hydroxyalkanoate) resin-containing fiber having excellent toughness, and to provide a fiber including the resin composition for a poly(3-hydroxyalkanoate) fiber.

### Description of Embodiments

Hereinafter, one embodiment of the present invention is described.

### [Resin Composition for Poly(3-hydroxyalkanoate) Fiber]

First, a resin composition for a poly(3-hydroxyalkanoate) fiber, according to the present embodiment, is described.

The resin composition for a poly(3-hydroxyalkanoate) fiber, according to the present embodiment, includes: a poly(3-hydroxyalkanoate) resin (A) having a weight-average molecular weight ranging from 200,000 to 700,000; and a poly(3-hydroxyalkanoate) resin (B) having a weight-average molecular weight ranging from 400,000 to 1,400,000.

The weight-average molecular weight of the poly(3-hydroxyalkanoate) resin (B) is greater than the weight-average molecular weight of the poly(3-hydroxyalkanoate) resin (A) by at least 200,000.

The content of the poly(3-hydroxyalkanoate) resin (A) is greater than the content of the poly(3-hydroxyalkanoate) resin (B).

By having the above configuration, the resin composition for a poly(3-hydroxyalkanoate) fiber, according to the present embodiment, is a resin composition intended for fabricating a poly(3-hydroxyalkanoate) resin-containing fiber having excellent toughness.

### <Poly(3-hydroxyalkanoate) resins (A) and (B)>

Each of the poly(3-hydroxyalkanoate) resins (A) and (B) is a biodegradable aliphatic polyester (preferably a polyester including no aromatic ring), and is a resin having at least one type or two or more types of 3-hydroxyalkanoate units (also referred to as "3-hydroxyalkanoic acid units"). In the present application, a poly(3-hydroxyalkanoate) resin is also referred to as a P3HA.

Preferably, the poly(3-hydroxyalkanoate) resin (A) and/or the poly(3-hydroxyalkanoate) resin (B) includes a 3-hydroxyalkanoic acid unit expressed by an equation (1) shown below.

[-CHR-CH₂-CO-O-] (1)

In the above equation (1), R is an alkyl group represented by CₚH₂ₚ₊₁, and p is an integer from 1 to 15. Examples of R include straight-chain or branched-chain alkyl groups, such as a methyl group, an ethyl group, a propyl group, a methylpropyl group, a butyl group, an isobutyl group, a t-butyl group, a pentyl group, and a hexyl group. As p, 1 to 10 is preferable, and 1 to 8 is more preferable.

As the poly(3-hydroxyalkanoate) resin (A) and/or the poly(3-hydroxyalkanoate) resin (B), a poly(3-hydroxyalkanoate) resin produced from microorganisms is particularly preferred. In a poly(3-hydroxyalkanoate) resin produced from microorganisms, all of the 3-hydroxyalkanoate units are contained as (R)-3-hydroxyalkanoate units.

The poly(3-hydroxyalkanoate) resin (A) and/or the poly(3-hydroxyalkanoate) resin (B) includes a 3-hydroxyalkanoate unit (particularly the unit represented by the above equation (1)) in an amount of preferably 50 mol% or greater, more preferably 60 mol% or greater, and even more preferably 70 mol% or greater, based on all the structural units (monomer units). Each poly(3-hydroxyalkanoate) resin may include, as structural units of the polymer, one type or two or more types of 3-hydroxyalkanoate units only, or may include, in addition to one type or two or more types of 3-hydroxyalkanoate units, other units (e.g., 4-hydroxyalkanoate units).

Preferably, the poly(3-hydroxyalkanoate) resin (A) and/or the poly(3-hydroxyalkanoate) resin (B) includes a 3-hydroxybutyrate (which may hereinafter be referred to as 3HB) unit. More preferably, the poly(3-hydroxyalkanoate) resin (A) and/or the poly(3-hydroxyalkanoate) resin (B) is a copolymer including a 3-hydroxybutyrate unit and another hydroxyalkanoate unit. Preferably, all of the 3-hydroxybutyrate units are (R)-3-hydroxybutyrate units.

The other hydroxyalkanoate unit may be a 3-hydroxyalkanoate unit that is not a 3HB unit, or may be a hydroxyalkanoate unit that is not a 3-hydroxyalkanoate unit (for example, it may be a 4-hydroxyalkanoate unit). The copolymer may include one type of the other hydroxyalkanoate unit, or two or more types of the other hydroxyalkanoate units.

Specific examples of the poly(3-hydroxyalkanoate) resin (A) and/or the poly(3-hydroxyalkanoate) resin (B) include poly(3-hydroxybutyrate) (abbreviated as P3HB) as a homopolymer, poly(3-hydroxybutyrate-co-3-hydroxypropionate), poly(3-hydroxybutyrate-co-3-hydroxyvalerate) (abbreviated as P3HB3HV), poly(3-hydroxybutyrate-co-3-hydroxyhexanoate) (abbreviated as P3HB3HH), poly(3-hydroxybutyrate-co-3-hydroxyvalerate-co-3-hydroxyhexanoate) (abbreviated as P3HB3HV3HH), poly(3-hydroxybutyrate-co-4-hydroxybutyrate) (abbreviated as P3HB4HB), poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), and poly(3-hydroxybutyrate-co-3-hydroxyundecanoate). Particularly from the viewpoints of, for example, the productivity and mechanical properties of the resin composition, P3HB3HH or P3HB4HB is preferable, and P3HB3HH is particularly preferable.

The P3HAs can be produced by microorganisms. Such a microbially produced P3HA is usually a P3HA constituted only by a D-body (R-body) hydroxyalkanoic acid repeating unit. Among microbially produced P3HAs, in consideration of the ease of the industrial production thereof, P3HB, P3HB3HH, P3HB3HV, P3HB3HV3HH, and P3HB4HB are preferable; P3HB, P3HB3HH, P3HB3HV, and P3HB4HB are more preferable; and P3HB3HH is particularly preferable. The P3HA (A) and the P3HA (B) may be the same resin, or may be resins that differ from each other in terms of monomer species.

The P3HA-producing microorganisms are not particularly limited, so long as they have a P3HA-producing ability. For example, Bacillus megaterium is the first discovered P3HB-producing bacteria, which was discovered in 1925, and also, natural microorganisms such as Cupriavidus necator (formerly classified as Alcaligenes eutrophus, Ralstonia eutropha) and Alcaligenes latus are known as other P3HB-producing bacteria. These microorganisms accumulate P3HB in their cells.

As bacteria that produce copolymers of 3HB and another hydroxyalkanoate, for example, Aeromonas caviae, which produces P3HB3HV and P3HB3HH, and Alcaligenes eutrophus, which produces P3HB4HB, are known. Particularly, for P3HB3HH production, Alcaligenes eutrophus AC32, FERM BP-6038 (T. Fukui, Y. Doi, J. Bateriol., 179, pp. 4821-4830 (1997)), into which a P3HA synthase group gene has been introduced to enhance P3HB3HH productivity, is preferable. These microorganisms are cultured under proper conditions, and the resulting microorganism cells having P3HA accumulated therein are used. Other than the above microorganisms, genetically-modified microorganisms, into which various P3HA synthesis-related genes have been introduced in accordance with the intended type of P3HA to be produced, may be used, and culture conditions including a substrate type may be optimized.

The weight-average molecular weight of the poly(3-hydroxyalkanoate) resin (A) ranges from 200,000 to 700,000. As a result of the weight-average molecular weight of the P3HA (A) being 200,000 or greater, a fiber that exhibits favorable physical properties can be formed by melt spinning. In addition, when the P3HA (A) having a weight-average molecular weight of 200,000 or greater is used in combination with the P3HA (B), which will be described below, crystallization of the resin composition after melt spinning is promoted, which makes it possible to produce a fiber having excellent toughness. Meanwhile, as a result of the weight-average molecular weight of the P3HA (A) being 700,000 or less, processability is improved, which facilitates the fabrication of the fiber. The weight-average molecular weight of the P3HA (A) is preferably from 400,000 to 670,000, and more preferably from 500,000 to 650,000.

The weight-average molecular weight of each P3HA can be determined as a molecular weight in terms of polystyrene by using a gel permeation chromatograph (GPC) ("High-Performance Liquid Chromatograph 20A System" available from Shimadzu Corporation), polystyrene gel columns ("K-G 4A" "K-806M" available from Showa Denko K. K.), and chloroform as a mobile phase. In this case, a calibration curve is prepared using polystyrene samples having weight-average molecular weights of 31,400, 197,000, 668,000, and 1,920,000. As the columns used in the GPC, any columns suitable for measuring the molecular weight may be used.

The poly(3-hydroxyalkanoate) resin (A) includes a 3-hydroxybutyrate unit and another hydroxyalkanoate unit, and the average molar ratio of the 3-hydroxybutyrate unit/the other hydroxyalkanoate unit in the poly(3-hydroxyalkanoate) resin (A) is preferably from 60/40 to 99.5/0.5 (mol%/mol%), more preferably from 65/45 to 99/1 (mol%/mol%), and even more preferably from 70/30 to 98/2 (mol%/mol%).

As a result of the average molar ratio falling within any of the above ranges, both the flexibility and stiffness of the resin composition for a poly(3-hydroxyalkanoate) fiber can be achieved, and the productivity thereof can also be improved.

It should be noted that the monomer composition ratio in each P3HA can be measured by gas chromatography or the like, and is measurable by, for example, a method described in Examples below.

The weight-average molecular weight of the poly(3-hydroxyalkanoate) resin (B) ranges from 400,000 to 1,400,000, and is greater than the weight-average molecular weight of the above-described P3HA (A) by at least 200,000. By using the P3HA (B) whose weight-average molecular weight is 400,000 or greater and is greater than the weight-average molecular weight of the P3HA (A) by at least 200,000, the molecular chains of this high-molecular-weight component are more easily oriented by melt spinning, and thereby crystallization is induced. As a result, crystallization is promoted by melt spinning, making it possible to produce a fiber having excellent toughness. By setting the weight-average molecular weight of the P3HA (B) to 1,400,000 or less, processability is improved, which facilitates the fabrication of the fiber. The weight-average molecular weight of the P3HA (B) is preferably from 500,000 to 1,300,000, more preferably from 600,000 to 1,200,000, and even more preferably from 700,000 to 1,100,000.

By using the P3HA (B) whose weight-average molecular weight is greater than the weight-average molecular weight of the P3HA (A) by at least 200,000, the effect of promoting crystallization by melt spinning can be achieved. If the difference between the weight-average molecular weight of the P3HA (B) and that of the P3HA (A) is less than 200,000, the crystallization promoting effect obtained by the use of the P3HA (B) will not be sufficient. The difference between the weight-average molecular weight of the P3HA (B) and that of the P3HA (A) is preferably 220,000 or greater, and more preferably 250,000 or greater.

The poly(3-hydroxyalkanoate) resin (B) includes a 3-hydroxybutyrate unit and another hydroxyalkanoate unit, and the average molar ratio of the 3-hydroxybutyrate unit/the other hydroxyalkanoate unit in the poly(3-hydroxyalkanoate) resin (B) is preferably from 85/15 to 99.5/0.5 (mol%/mol%), more preferably from 93/7 to 99/1 (mol%/mol%), and even more preferably from 93/7 to 98/2 (mol%/mol%).

As a result of the average molar ratio falling within any of the above ranges, both the flexibility and stiffness of the resin composition for a poly(3-hydroxyalkanoate) fiber can be achieved, and the productivity thereof can also be improved.

The content of the poly(3-hydroxyalkanoate) resin (A) is greater than the content of the poly(3-hydroxyalkanoate) resin (B).

The weight ratio of the content of the poly(3-hydroxyalkanoate) resin (A) to the content of the poly(3-hydroxyalkanoate) resin (B) (i.e., the content of the P3HA (A)/the content of the P3HA (B)) is preferably from 95/5 to 70/30, more preferably from 93/7 to 75/25, and even more preferably from 91/9 to 80/20.

As a result of the content of the P3HA (A) being greater than the content of the P3HA (B), a fiber having excellent toughness can be produced.

The resin composition for a poly(3-hydroxyalkanoate) fiber, according to the present embodiment, contains the P3HA (A) and the P3HA (B) in a total amount preferably from 50 to 100% by weight, more preferably from 60 to 100% by weight, even more preferably from 80 to 100% by weight, and particularly preferably from 90 to 99% by weight.

The resin composition for a poly(3-hydroxyalkanoate) fiber, according to the present embodiment, includes a 3-hydroxybutyrate unit and another hydroxyalkanoate unit, and the average molar ratio of the 3-hydroxybutyrate unit/the other hydroxyalkanoate unit in the resin composition for a poly(3-hydroxyalkanoate) fiber is preferably from 80/20 to 95/5 (mol%/mol%), more preferably from 83/17 to 92/7 (mol%/mol%), and even more preferably from 85/15 to 90/10 (mol%/mol%).

As a result of the average molar ratio falling within any of the above ranges, both the flexibility and stiffness of the resin composition for a poly(3-hydroxyalkanoate) fiber can be achieved, and the productivity thereof can also be improved.

The resin composition for a poly(3-hydroxyalkanoate) fiber, according to the present embodiment, may arbitrarily contain, in addition to the P3HA (A) and the P3HA (B), at least one selected from the group consisting of another resin, a crystal nucleating agent, and a lubricant.

### <Another Resin>

The resin composition for a poly(3-hydroxyalkanoate) fiber may contain another resin that is neither the P3HA (A) nor the P3HA (B). The other resin is not particularly limited, but is preferably a resin that does not significantly deteriorate compatibility or processability during fabrication of a fiber from the resin composition for a poly(3-hydroxyalkanoate) fiber, or does not significantly deteriorate mechanical properties of the resulting fiber. In a case where the resulting fiber is used in an application requiring biodegradability, the other resin is preferably a biodegradable resin.

Examples of the other resin include: an aliphatic polyester having a structure obtained by polycondensation of an aliphatic diol and an aliphatic dicarboxylic acid; and an aliphatic aromatic polyester containing both aliphatic and aromatic compounds as monomers. Examples of the former include polyethylene succinate, polybutylene succinate (PBS), polyhexamethylene succinate, polyethylene adipate, polybutylene adipate, polyhexamethylene adipate, polybutylene succinate adipate (PBSA), polyethylene sebacate, and polybutylene sebacate. Examples of the latter include poly(butylene adipate-co-butylene terephthalate) (PBAT), poly(butylene sebacate-co-butylene terephthalate), poly(butylene azelate-co-butylene terephthalate), and poly(butylene succinate-co-butylene terephthalate) (PBST). One type of the other resin may be used alone, or two or more types of the other resins may be used in combination.

In a case where the resin composition for a poly(3-hydroxyalkanoate) fiber contains the other resin, the content of the other resin is preferably 250 parts by weight or less, more preferably 100 parts by weight or less, even more preferably 50 parts by weight or less, and particularly preferably 20 parts by weight or less, per 100 parts by weight of the total of the P3HA (A) and the P3HA (B). Further, the content of the other resin may be 10 parts by weight or less, 5 parts by weight or less, or 1 part by weight or less, per 100 parts by weight of the total of the P3HA (A) and the P3HA (B). The lower limit of the content of the other resin is not particularly limited, but may be 0 parts by weight.

### <Crystal Nucleating Agent>

The resin composition for a poly(3-hydroxyalkanoate) fiber may further contain a crystal nucleating agent. As a result of the resin composition for a poly(3-hydroxyalkanoate) fiber containing a crystal nucleating agent, the crystallization of the resin component is further promoted, making it possible to improve tensile strength, productivity, and so forth.

The crystal nucleating agent is not particularly limited, and a conventionally known crystal nucleating agent may be used. Examples of the crystal nucleating agent include: sugar alcohol compounds derived from natural products (e.g., pentaerythritol, erythritol, galactitol, mannitol, arabitol, etc.); inorganic substances (e.g., boron nitride, titanium oxide, talc, layered silicate, calcium carbonate, sodium chloride, metal phosphate, etc.); polyvinyl alcohol; chitin; chitosan; polyethylene oxides; aliphatic carboxylates; aliphatic alcohols; aliphatic carboxylic acid esters; dicarboxylic acid derivatives (dimethyl adipate, dibutyl adipate, di-isodecyl adipate, and dibutyl sebacate); cyclic compounds having, in their molecule, C=O and a functional group selected from the group consisting of NH, S, and O (e.g., indigo, quinacridone, quinacridone magenta, etc.); sorbitol derivatives (e.g., bis-benzylidene sorbitol, bis(p-methylbenzylidene)sorbitol, etc.); compounds including a nitrogen-containing heteroaromatic nucleus (e.g., pyridine ring, triazine ring, imidazole ring, etc.) (e.g., pyridine, triazine, imidazole, etc.); phosphate ester compounds; bisamides of higher fatty acids; metal salts of higher fatty acids; and branched polylactic acid. One of these crystal nucleating agents may be used alone, or two or more of these crystal nucleating agents may be used in combination.

The content of the crystal nucleating agent is not particularly limited, so long as the crystallization of the resin component can be promoted. The resin composition for a poly(3-hydroxyalkanoate) fiber, according to the present embodiment, includes the crystal nucleating agent (in particular, pentaerythritol) in an amount preferably from 0.1 to 10 parts by weight, and more preferably from 0.5 to 8 parts by weight, per 100 parts by weight of the resin composition for a poly(3-hydroxyalkanoate) fiber. When the content of the crystal nucleating agent falls within either of the above ranges, the molten state and the degree of progress of crystallization during fiber fabrication can be appropriately maintained, which makes it possible to obtain intended effects as the crystal nucleating agent while suppressing degradation of the physical properties of the fiber and bleed-out of the crystal nucleating agent.

### <Lubricant>

The resin composition for a poly(3-hydroxyalkanoate) fiber, according to the present embodiment, may further contain a lubricant. By containing a lubricant in the resin composition, the surface smoothness of the resulting fiber can be improved. The lubricant to be contained in the resin composition is not particularly limited, but is preferably at least one selected from the group consisting of a behenic acid amide, a stearic acid amide, an erucic acid amide, and an oleic acid amide. By containing these lubricants in the resin composition, the resulting fiber can have favorable lubricity (in particular, external lubricity). Among these lubricants, the resin composition preferably contains a behenic acid amide and/or an erucic acid amide from the viewpoints of improving processability and productivity.

As the lubricant, a behenic acid amide, a stearic acid amide, an erucic acid amide, an oleic acid amide, or a combination of any two or more of these may be used. Alternatively, the lubricant may be a combination of a behenic acid amide, a stearic acid amide, an erucic acid amide, or an oleic acid amide with other lubricants (hereinafter referred to as "the other lubricants"). Examples of the other lubricants include, but are not limited to, alkylene fatty acid amides, such as methylenebisstearic acid amide and ethylenebisstearic acid amide; polyethylene waxes; oxidized polyester waxes; glycerol monofatty acid esters, such as glycerol monostearate, glycerol monobehenate, and glycerol monolaurate; organic acid monoglycerides, such as succinic acid saturated fatty acid monoglyceride; sorbitan fatty acid esters, such as sorbitan behenate, sorbitan stearate, and sorbitan laurate; polyglycerol fatty acid esters, such as diglycerol stearate, diglycerol laurate, tetraglycerol stearate, tetraglycerol laurate, decaglycerol stearate, and decaglycerol laurate; and higher alcohol fatty acid esters, such as stearyl stearate. One of these other lubricants may be used alone, or two or more of these other lubricants may be used in combination.

The content of the lubricant (in a case where a plurality of lubricants are used, the total content thereof) is not particularly limited, so long as lubricity can be imparted to the fiber, and is preferably 0.01 to 20 parts by weight, more preferably 0.05 to 10 parts by weight, even more preferably 0.5 to 10 parts by weight, yet more preferably 0.5 to 5 parts by weight, and particularly preferably 0.7 to 4 parts by weight, per 100 parts by weight of the total of the P3HA (A) and the P3HA (B). When the content of the lubricant is within any of the above ranges, intended effects as the lubricant can be obtained while avoiding bleed-out of the lubricant on the surface of the fiber.

### <Other Components>

The resin composition for a poly(3-hydroxyalkanoate) fiber can contain other components, such as a plasticizer, an inorganic filler, an antioxidant, an ultraviolet absorber, a colorant such as a dye or pigment, and an antistatic agent, so long as the functions of a resulting formed article will not be impaired.

The plasticizer is not particularly limited, and examples thereof include: modified glycerol compounds, such as glycerol diacetomonolaurate, glycerol diacetomonocaprylate, and glycerol diacetomonodecanoate; adipic acid ester compounds, such as diethylhexyl adipate, dioctyl adipate, and diisononyl adipate; polyether ester compounds, such as polyethylene glycol dibenzoate, polyethylene glycol dicaprylate, and polyethylene glycol diisostearate; benzoic acid ester compounds; epoxidized soybean oil; epoxidized fatty acid 2-ethylhexyl; and sebacic acid monoesters. One of these plasticizers may be used alone, or two or more of these plasticizers may be used in combination. Among these plasticizers, in terms of availability and effectiveness, modified glycerol compounds and polyether ester compounds are preferred. One of these preferred plasticizers may be used alone, or two or more of them may be used in combination.

The inorganic filler is not particularly limited, and examples thereof include clay, synthetic silica, carbon black, barium sulfate, mica, glass fiber, whisker, carbon fiber, calcium carbonate, magnesium carbonate, glass powder, metal powder, kaolin, graphite, molybdenum disulfide, and zinc oxide. One of these inorganic fillers may be used alone, or two or more of them may be used in combination.

The antioxidant is not particularly limited, and examples thereof include phenolic antioxidants, phosphorus-containing antioxidants, and sulfur-containing antioxidants. One of these antioxidants may be used alone, or two or more of them may be used in combination.

The ultraviolet absorber is not particularly limited, and examples thereof include benzophenone compounds, benzotriazole compounds, triazine compounds, salicylic acid compounds, cyanoacrylate compounds, and nickel complex compounds. One of these ultraviolet absorbers may be used alone, or two or more of them may be used in combination.

The colorant such as a pigment or dye is not particularly limited, and examples thereof include: inorganic colorants, such as titanium oxide, calcium carbonate, chromium oxide, cuprous oxide, calcium silicate, iron oxide, carbon black, graphite, titanium yellow, and cobalt blue; soluble azo pigments, such as lake red, lithol red, and brilliant carmine; insoluble azo pigments, such as dinitroaniline orange and fast yellow; phthalocyanine pigments, such as monochlorophthalocyanine blue, polychlorophthalocyanine blue, and polybromophthalocyanine green; condensed polycyclic pigments, such as indigo blue, perylene red, isoindolinone yellow, and quinacridone red; and dyes, such as oracet yellow. One of these colorants may be used alone, or two or more of them may be used in combination.

The antistatic agent is not particularly limited, and examples thereof include: low-molecular-weight antistatic agents, such as fatty acid ester compounds, aliphatic ethanolamine compounds, and aliphatic ethanolamide compounds; and high-molecular-weight antistatic agents. One of these antistatic agents may be used alone, or two or more of them may be used in combination.

The content of each of the other components described above is not particularly limited, so long as the effects of the present invention can be achieved, and may be appropriately determined by a person of ordinary skill in the art.

### [Method for Producing Resin Composition for Poly(3-hydroxyalkanoate) Fiber]

The resin composition for a poly(3-hydroxyalkanoate) fiber, according to the present embodiment, can be produced by a known method. Specifically, a method may be employed in which the P3HA (A), the P3HA (B), and other optional components are melt-kneaded using an extruder, a kneader, a Banbury mixer, kneading rolls, or the like. In the case of performing such melt kneading, it is preferable to perform mixing while taking care to prevent a decrease in molecular weight due to thermal decomposition. Alternatively, the resin composition for a poly(3-hydroxyalkanoate) fiber can also be produced by dissolving the components in an appropriate solvent and then removing the solvent.

In the case of producing the resin composition by melt kneading, each component may be charged separately into an extruder or the like, or the components may be premixed and then charged into an extruder or the like. When the melt kneading is performed using an extruder, the resulting resin composition for a poly(3-hydroxyalkanoate) fiber may be extruded as a strand and then cut into granules having, for example, a bar shape, a columnar shape, an elliptical columnar shape, a spherical shape, a cubic shape, or a rectangular parallelepiped shape.

The resin temperature during the melt kneading cannot be uniformly specified since it depends on factors such as the melting point and melt viscosity of the resin used. However, from the viewpoint of achieving favorable dispersibility while avoiding thermal decomposition of the P3HA (A) and the P3HA (B), the resin temperature during the melt kneading is preferably from 140 to 200°C, more preferably from 150 to 195°C, and even more preferably from 160 to 190°C.

### [Fiber]

The fiber according to the present embodiment includes the above-described resin composition for a poly(3-hydroxyalkanoate) fiber.

Specifically, the fiber according to the present embodiment includes the resin composition for a poly(3-hydroxyalkanoate) fiber, the resin composition including the poly(3-hydroxyalkanoate) resin (A) having a weight-average molecular weight ranging from 200,000 to 700,000 and the poly(3-hydroxyalkanoate) resin (B) having a weight-average molecular weight ranging from 400,000 to 1,400,000. The weight-average molecular weight of the poly(3-hydroxyalkanoate) resin (B) is greater than the weight-average molecular weight of the poly(3-hydroxyalkanoate) resin (A) by at least 200,000. The content of the poly(3-hydroxyalkanoate) resin (A) is greater than the content of the poly(3-hydroxyalkanoate) resin (B).

The fiber according to the present embodiment may contain the resin composition for a poly(3-hydroxyalkanoate) fiber in an amount preferably from 50 to 100% by weight, more preferably from 60 to 100% by weight, even more preferably from 80 to 100% by weight, and particularly preferably from 90 to 100% by weight. The fiber according to the present embodiment may contain the resin composition for a poly(3-hydroxyalkanoate) fiber in an amount of 100% by weight.

The fiber according to the present embodiment may be a multifilament including a plurality of single filaments, or may be a monofilament that is a single fiber (a "single fiber" is also referred to as a "single filament"). In other words, the fiber according to the present embodiment may be either a multifilament or a monofilament depending on its intended application. The single fiber includes the resin composition for a poly(3-hydroxyalkanoate) fiber.

In a case where the fiber according to the present embodiment is a multifilament, the single-filament fineness of the fiber is preferably from 0.5 to 15 dtex, and more preferably from 1.0 to 10 dtex, from the viewpoints of achieving excellent tensile strength, excellent fineness, and excellent toughness.

In a case where the fiber according to the present embodiment is a monofilament, the single-filament fineness of the fiber is preferably from 50 to 3,000 dtex, and more preferably from 100 to 500 dtex, from the viewpoints of achieving excellent tensile strength, excellent fineness, and excellent toughness.

The fiber length of the single fiber is preferably five times or more the maximum diameter of the single fiber, and more preferably ten times or more the maximum diameter of the single fiber.

### [Method for Producing Fiber]

A method for producing the fiber according to the present embodiment is a production method for obtaining the fiber by melt spinning.

The method for producing the fiber according to the present embodiment includes the steps of: (A) obtaining a raw filament by discharging a molten product of the resin composition for a poly(3-hydroxyalkanoate) fiber through a discharge hole; (B) cooling the raw filament; and (C) obtain the poly(3-hydroxyalkanoate) fiber by drawing the cooled raw filament.

In the step (A), the resin composition for a poly(3-hydroxyalkanoate) fiber is charged into an extruder and melted therein to obtain the molten product. Then, the molten product is discharged through a spinning nozzle to obtain the raw filament.

In the step (B), the raw filament obtained in the step (A) is cooled. A cooling method used in the step (B) may be, for example, a method in which cooing air is applied to the raw filament, or a method in which the raw filament is passed through a water tank.

In the step (C), the raw filament that has been cooled in the step (B) is hauled off by haul-off rolls and drawn by drawing rolls to obtain the fiber.

After the raw filament has been hauled off by the haul-off rolls and before it is drawn by the drawing rolls, the raw filament may be warmed with hot water.

From the viewpoints of increasing the strength and toughness of the fiber, in a case where the fiber is a monofilament, the draw ratio in the step (C) is preferably 6.0 times or greater, more preferably 7.0 times or greater, even more preferably 8.0 times or greater, yet more preferably 9.0 times or greater, and in a case where the fiber is a multifilament, the draw ratio in the step (C) is preferably 1.5 times or greater, more preferably 1.7 times or greater, and even more preferably 1.8 times or greater.

In a case where the fiber is a monofilament, the draw ratio is, for example, 12 times or less, and more specifically 10 times or less, whereas in a case where the fiber is a multifilament, the draw ratio is, for example, 3.0 times or less, and more specifically 2.0 times or less.

It should be noted that the draw ratio can be determined by using an equation shown below. 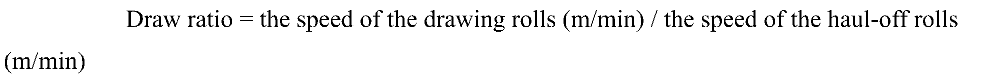 Draw ratio = the speed of the drawing rolls (m/min) / the speed of the haul-off rolls (m/min)

The resin composition for a poly(3-hydroxyalkanoate) fiber, or the fiber including the composition, is suitable for use in the fields of agriculture, fishery, forestry, horticulture, medicine, sanitary items, food industry, clothing, non-clothing, packaging, automobiles, building materials, and others.

It should be noted that the present invention is not limited to the above-described embodiment. Also, the present invention is not limited by the above-described functional advantages. Further, various modifications can be made to the present invention without departing from the scope of the present invention.

### [Disclosure Items]

The following items each indicate a preferable mode of the present disclosure. The present invention is not limited to the following items.

### [Item 1]

A poly(3-hydroxyalkanoate) fiber including a resin composition for a poly(3-hydroxyalkanoate) fiber, the resin composition including a poly(3-hydroxyalkanoate) resin (A) having a weight-average molecular weight ranging from 200,000 to 700,000 and a poly(3-hydroxyalkanoate) resin (B) having a weight-average molecular weight ranging from 400,000 to 1,400,000, wherein: the weight-average molecular weight of the poly(3-hydroxyalkanoate) resin (B) is greater than the weight-average molecular weight of the poly(3-hydroxyalkanoate) resin (A) by at least 200,000; and a content of the poly(3-hydroxyalkanoate) resin (A) is greater than a content of the poly(3-hydroxyalkanoate) resin (B).

### [Item 2]

The poly(3-hydroxyalkanoate) fiber according to item 1, wherein a weight ratio of the content of the poly(3-hydroxyalkanoate) resin (A) to the content of the poly(3-hydroxyalkanoate) resin (B) is from 95/5 to 70/30.

### [Item 3]

The poly(3-hydroxyalkanoate) fiber according to item 1 or 2, wherein the poly(3-hydroxyalkanoate) resin (A) and/or the poly(3-hydroxyalkanoate) resin (B) includes a 3-hydroxyalkanoic acid unit expressed by the following equation (1):

[-CHR-CH₂-CO-O-] (1)

(in the equation (1), R is an alkyl group represented by CₚH₂ₚ₊₁, and p is an integer from 1 to 15).

### [Item 4]

The poly(3-hydroxyalkanoate) fiber according to item 3, wherein the poly(3-hydroxyalkanoate) resin (A) and/or the poly(3-hydroxyalkanoate) resin (B) is at least one selected from the group consisting of poly(3-hydroxybutyrate), poly(3-hydroxybutyrate-3-hydroxypropionate), poly(3-hydroxybutyrate-co-3-hydroxyvalerate), poly(3-hydroxybutyrate-co-3-hydroxyhexanoate), poly(3-hydroxybutyrate-co-3-hydroxyvalerate-co-3-hydroxyhexanoate), and poly(3-hydroxybutyrate-co-4-hydroxybutyrate).

### [Item 5]

The poly(3-hydroxyalkanoate) fiber according to item 4, wherein the poly(3-hydroxyalkanoate) resin (A) and/or the poly(3-hydroxyalkanoate) resin (B) is poly(3-hydroxybutyrate-co-3-hydroxyhexanoate).

### [Item 6]

The poly(3-hydroxyalkanoate) fiber according to any one of items 1 to 5, wherein: the resin composition for a poly(3-hydroxyalkanoate) fiber includes a 3-hydroxybutyrate unit and another hydroxyalkanoate unit; and an average molar ratio of the 3-hydroxybutyrate unit/the other hydroxyalkanoate unit in the resin composition for a poly(3-hydroxyalkanoate) fiber is from 80/20 to 95/5 (mol%/mol%).

### [Item 7]

The poly(3-hydroxyalkanoate) fiber according to any one of items 1 to 6, wherein: the poly(3-hydroxyalkanoate) resin (B) includes a 3-hydroxybutyrate unit and another hydroxyalkanoate unit; and an average molar ratio of the 3-hydroxybutyrate unit/the other hydroxyalkanoate unit in the poly(3-hydroxyalkanoate) resin (B) is from 93/7 to 99/1 (mol%/mol%).

### [Item 8]

The poly(3-hydroxyalkanoate) fiber according to any one of items 1 to 7, wherein the resin composition for a poly(3-hydroxyalkanoate) fiber includes pentaerythritol in an amount from 0.1 to 10 parts by weight per 100 parts by weight of the resin composition for a poly(3-hydroxyalkanoate) fiber.

### [Item 9]

A resin composition for a poly(3-hydroxyalkanoate) fiber, including: a poly(3-hydroxyalkanoate) resin (A) having a weight-average molecular weight ranging from 200,000 to 700,000; and a poly(3-hydroxyalkanoate) resin (B) having a weight-average molecular weight ranging from 400,000 to 1,400,000, wherein: the weight-average molecular weight of the poly(3-hydroxyalkanoate) resin (B) is greater than the weight-average molecular weight of the poly(3-hydroxyalkanoate) resin (A) by at least 200,000; and a content of the poly(3-hydroxyalkanoate) resin (A) is greater than a content of the poly(3-hydroxyalkanoate) resin (B).

### [Item 10]

The resin composition for a poly(3-hydroxyalkanoate) fiber, according to item 9, wherein a weight ratio of the content of the poly(3-hydroxyalkanoate) resin (A) to the content of the poly(3-hydroxyalkanoate) resin (B) is from 95/5 to 70/30.

### [Item 11]

A method for producing a fiber by melt spinning, the method including the steps of: (A) obtaining a raw filament by discharging a molten product of the resin composition for a poly(3-hydroxyalkanoate) fiber according to claim 9 or 10 through a discharge hole; (B) cooling the raw filament; and (C) obtaining the fiber by drawing the cooled raw filament.

### [Item 12]

The method for producing a fiber, according to item 11, wherein a draw ratio in the step (C) is 5.0 times or greater.

### Examples

Next, the present invention is described more specifically with Examples and Comparative Examples. It should be noted that the present invention is not limited by these Examples in any way.

Materials used in Examples and Comparative Examples are indicated below.

### <Poly(3-hydroxyalkanoate) resin (P3HA)>

- P3HB3HH (A-1): P3HB3HH (average molar ratio of 3HB/3HH = 97.2/2.8 (mol%/mol%), weight-average molecular weight = 660,000 g/mol)
   The P3HB3HH (A-1) was produced in accordance with a method described in Example 2 of WO 2019/142845.
- P3HB3HH (A-2): P3HB3HH (average molar ratio of 3HB/3HH = 71.8/28.2 (mol%/mol%), weight-average molecular weight = 660,000 g/mol)
   The P3HB3HH (A-2) was produced in accordance with a method described in Example 9 of WO 2019/142845.
- P3HB3HH (A-3): P3HB3HH (average molar ratio of 3HB/3HH = 94.0/6.0 (mol%/mol%), weight-average molecular weight = 660,000 g/mol)
   The P3HB3HH (A-3) was produced in accordance with a method described in Example 1 of WO 2019/142845.
- P3HB3HH (B-1): P3HB3HH (average molar ratio of 3HB/3HH = 94.0/6.0 (mol%/mol%), weight-average molecular weight = 900,000 g/mol)
   The P3HB3HH (B-1) was produced in accordance with a method described in Example 1 of WO 2019/142845.
- P3HB3HH (B-2): P3HB3HH (average molar ratio of 3HB/3HH = 89.0/11.0 (mol%/mol%), weight-average molecular weight = 900,000 g/mol)
   The P3HB3HH (B-2) was produced in accordance with a method described in Example 5 of WO 2019/142845.
- P3HB3HH (C-1): P3HB3HH (average molar ratio of 3HB/3HH = 94.0/6.0 (mol%/mol%), weight-average molecular weight =400,000 g/mol)
   The P3HB3HH (C-1) was produced in accordance with a method described in Example 1 of WO 2019/142845.

### <Monomer Composition Ratio of P3HA>

The monomer composition ratio of each P3HB3HH as a P3HA including a 3-hydroxyhexanoate unit was determined in the following manner. To about 20 mg of the P3HA, 1 mL of a sulfuric acid-methanol mixed solution (15:85) and 1 mL of chloroform were added. The resulting sample was placed in a container, and the container was sealed. The sample in the sealed container was heated at 100°C for 140 minutes, and thereby a methyl ester that was a P3HB3HH degradation product was obtained. The obtained methyl ester was cooled, and then 0.5 mL of deionized water was added to and mixed well with the cooled methyl ester. Thereafter, the resulting mixture was left to stand to separate into an aqueous layer and an organic layer. Subsequently, the organic layer was aliquoted, and then the monomer unit composition of the P3HA degradation product in the aliquoted organic layer was analyzed by capillary gas chromatography. Based on obtained peak areas, the average molar ratio of 3-hydroxybutyrate (3HB) to another hydroxyalkanoate unit (in the Examples and Comparative Examples, the other hydroxyalkanoate unit was 3-hydroxyhexanoate (3HH)) was calculated.

### <Measurement of Weight-Average Molecular Weight of P3HA>

The weight-average molecular weight of the P3HA was determined in the following manner. First, the resin to be measured was dissolved in chloroform, and heated at 60°C in a hot-water bath for 0.5 hours. Then, the soluble portion thereof was filtered through a disposable PTFE filter having a pore diameter of 0.45 µm, and the resulting filtrate was used in GPC measurement that was performed under the following conditions, thereby measuring and determining the value of the weight-average molecular weight.
GPC measurement equipment: High-Performance Liquid Chromatograph 20A System available from Shimadzu Corporation
Column: K-G 4A (1 column), K-806M (2 columns) available from Showa Denko K. K.
Sample concentration: 1 mg/ml
Eluent: Chloroform solution
Eluent flow rate: 1.0 ml/min
Sample injection amount: 100 µL
Analysis period: 30 minutes
Standard sample: standard polystyrene

### <Additives>

Additive 1: Pentaerythritol (Neulizer P: available from Mitsubishi Chemical Corporation)
Additive 2: Behenic acid amide (BNT-22H: available from Nippon Fine Chemical Co., Ltd.)
Additive 3: Erucic acid amide (NEUTRON-S: available from Nippon Fine Chemical Co., Ltd.)

### (Example 1)

### [Fabrication of Resin Composition Pellets for Poly(3-hydroxyalkanoate) Fiber]

A P3HA obtained by blending 90% by weight (a content ratio in the total P3HA components) of the P3HB3HH (A-3) and 10% by weight (a content ratio in the total P3HA components) of the P3HB3HH (B-1) was further blended with 1.0 part by weight (a content per 100 parts by weight of the total P3HA components) of Additive 1, 0.5 parts by weight (a content per 100 parts by weight of the total P3HA components) of Additive 2, and 0.5 parts by weight (a content per 100 parts by weight of the total P3HA components) of Additive 3 to obtain a resin mixture. The resin mixture was charged into a Φ40 mm co-rotating twin screw extruder with its cylinder and extrusion nozzle temperatures set to 150°C, and a strand was extruded from the extruder. The strand was passed through a water tank filled with hot water of 40°C to be solidified, and the solidified strand was pelletized using a pelletizer to obtain resin composition pellets for a poly(3-hydroxyalkanoate) fiber.

It should be noted that, in Example 1, the P3HB3HH (A-3) was the P3HA (A), and the P3HB3HH (B-1) was the P3HA (B).

In the resin composition, the average molar ratio of 3HB/3HH was 94.0/6.0 (mol%/mol%).

### [Fabrication of Monofilament as Fiber]

In the step (A), the resin composition pellets for a poly(3-hydroxyalkanoate) fiber were charged into a single screw extruder with its cylinder and spinning nozzle temperatures set to 165°C (screw diameter: 30 mm) and melted therein to obtain a molten product. Next, the molten product was discharged through a spinning nozzle having five circular discharge holes with a diameter of 1.5 mm to obtain five raw filaments.

In the step (B), the raw filaments were passed through a water tank for cooling.

In the step (C), the raw filaments that had been cooled were hauled off by haul-off rolls (at a speed of 5.0 m/min), and immediately thereafter the raw filaments were passed through a hot-water bath having a length of 3 m and filled with hot water, and then the raw filaments were drawn by drawing rolls (at a speed of 45.0 m/min) to obtain five fibers as monofilaments. The draw ratio was 9.0 times.

### (Example 2)

Resin composition pellets for a poly(3-hydroxyalkanoate) fiber, and monofilaments as fibers, were fabricated in the same manner as in Example 1 except that, in Example 2, the P3HB3HH (B-2) was used instead of the P3HB3HH (B-1).

It should be noted that, in Example 2, the P3HB3HH (A-3) was the P3HA (A), and the P3HB3HH (B-2) was the P3HA (B).

The average molar ratio of 3HB/3HH in the resin composition was 93.5/6.5 (mol%/mol%).

### (Example 3)

Resin composition pellets for a poly(3-hydroxyalkanoate) fiber, and monofilaments as fibers, were fabricated in the same manner as in Example 1 except that, in Example 3, pentaerythritol as Additive 1 was not used.

It should be noted that, in Example 3, the P3HB3HH (A-3) was the P3HA (A), and the P3HB3HH (B-1) was the P3HA (B).

In the resin composition, the average molar ratio of 3HB/3HH was 94.0/6.0 (mol%/mol%).

### (Example 4)

Resin composition pellets for a poly(3-hydroxyalkanoate) fiber, and monofilaments as fibers, were fabricated in the same manner as in Example 1 except that, in Example 4, the P3HA used therein was obtained by blending 35% by weight of the P3HB3HH (A-1), 35% by weight of the P3HB3HH (A-2), 20% by weight of the P3HB3HH (A-3), and 10% by weight of the P3HB3HH (B-2), and the draw ratio was set to 8.5 times.

In the resin composition, the average molar ratio of 3HB/3HH was 86.8/13.2 (mol%/mol%).

### (Example 5)

### [Fabrication of Resin Composition Pellets for Poly(3-hydroxyalkanoate) Fiber]

Resin composition pellets for a poly(3-hydroxyalkanoate) fiber were obtained in the same manner as in Example 1.

In the resin composition, the average molar ratio of 3HB/3HH was 94.0/6.0 (mol%/mol%).

### [Fabrication of Multifilament as Fiber]

In the step (A), the resin composition pellets for a poly(3-hydroxyalkanoate) fiber were charged into a single screw extruder with its cylinder and spinning nozzle temperatures set to 180°C (screw diameter: 25 mm) and melted therein to obtain a molten product. Next, the molten product was discharged through a spinning nozzle having 128 circular discharge holes with a diameter of 0.65 mm to obtain 128 raw filaments.

In the step (B), the raw filaments were cooled by applying cooling air having a temperature of 6°C thereto.

In the step (C), the raw filaments that had been cooled in the step (B) were hauled off (at a speed of 450 m/min) by haul-off rolls heated to 40°C, and immediately thereafter the raw filaments were subjected to continuous drawing by drawing rolls at 810 m/min to obtain a fiber as a multifilament (including 128 single filaments). The draw ratio was 1.8 times.

### (Example 6)

Resin composition pellets for a poly(3-hydroxyalkanoate) fiber, and a multifilament as a fiber, were fabricated in the same manner as in Example 5 except that, in Example 6, the P3HB3HH (B-2) was used instead of the P3HB3HH (B-1) and the draw ratio was set to 1.9 times.

It should be noted that, in Example 6, the P3HB3HH (A-3) was the P3HA (A), and the P3HB3HH (B-2) was the P3HA (B).

The average molar ratio of 3HB/3HH in the resin composition was 93.5/6.5 (mol%/mol% ).

### (Comparative Example 1)

Resin composition pellets for a poly(3-hydroxyalkanoate) fiber, and monofilaments as fibers, were fabricated in the same manner as in Example 3 except that, in Comparative Example 1, the P3HA used therein was only the P3HB3HH (A-3) and the draw ratio was set to 8.5 times.

In the resin composition, the average molar ratio of 3HB/3HH was 94.0/6.0 (mol%/mol%).

### (Comparative Example 2)

Resin composition pellets for a poly(3-hydroxyalkanoate) fiber, and monofilaments as fibers, were fabricated in the same manner as in Example 1 except that, in Comparative Example 2, the P3HA used therein was obtained by blending 30% by weight of the P3HB3HH (A-1), 30% by weight of the P3HB3HH (A-2), 10% by weight of the P3HB3HH (A-3), and 30% by weight of the P3HB3HH (C-1).

It should be noted that, in Comparative Example 2, each of the P3HB3HH (A-1), the P3HB3HH (A-2), and the P3HB3HH (A-3) was the P3HA (B), and the P3HB3HH (C-1) was the P3HA (A).

The average molar ratio of 3HB/3HH in the resin composition was 88.3/11.7 (mol%/mol%).

### (Comparative Example 3)

Resin composition pellets for a poly(3-hydroxyalkanoate) fiber, and a multifilament as a fiber, were fabricated in the same manner as in Example 1 except that, in Comparative Example 3, the P3HA used therein was obtained by blending 38% by weight of the P3HB3HH (A-1), 38% by weight of the P3HB3HH (A-2), and 24% by weight of the P3HB3HH (A-3) and the draw ratio was set to 5.0 times.

In the resin composition, the average molar ratio of 3HB/3HH was 86.8/13.2 (mol%/mol%).

### (Comparative Example 4)

Resin composition pellets for a poly(3-hydroxyalkanoate) fiber, and monofilaments as fibers, were fabricated in the same manner as in Example 5 except that, in Comparative Example 4, the P3HA used therein was only the P3HB3HH (A-3).

The average molar ratio of 3HB/3HH in the resin composition was 94.0/6.0 (mol%/mol% ).

### <Fineness of Single Filament of Fiber>

The fineness of the single filaments of the fibers was measured using an auto-vibroscope method.

Table 1 below shows the measured single-filament fineness (hereinafter also simply referred to as "fineness").

### <Tensile Strength and Breaking Elongation of Single Filament of Fiber>

The tensile strength and breaking elongation of the single filaments of the fibers were measured based on JIS L 1015:2021 "Test methods for man-made staple fibres" under the conditions of an initial gauge length of 20 mm and a speed of 20 mm/min.

It should be noted that the tensile strength of the single filaments was determined in a manner described below.

First, the load at break (cN) of each single filament was measured using a tensile measurement instrument AUTOGRAPH AG-I (available from Shimadzu Corporation) under the conditions indicated below.
The initial gauge length of each single fiber: 20 mm
Tensile speed: 20 mm/min
Load cell: a load cell having a rated capacity of 5N

Then, the tensile strength of each single filament was measured based on an equation below using the fineness of the single filament measured with the auto-vibroscope method.

Tensile strength of the single filament (cN/dtex) = load at break (cN) of the single filament / fineness of the single filament

The measured single-filament fineness (hereinafter also simply referred to as "fineness") and the measured single-filament tensile strength (hereinafter also simply referred to as "tensile strength") are shown in Table 1 below.

### <Toughness>

The toughness of the single filaments of the fibers was calculated based on an equation below in accordance with the disclosure in Japanese Laid-Open Patent Application Publication No. 2019-136348. $Toughness = tensile strength \left[unit:N/dtex\right] \times {\left(breaking elongation \left[unit:%\right]\right)}^{1 / 2}$

The measured toughness is shown in Table 1 below.

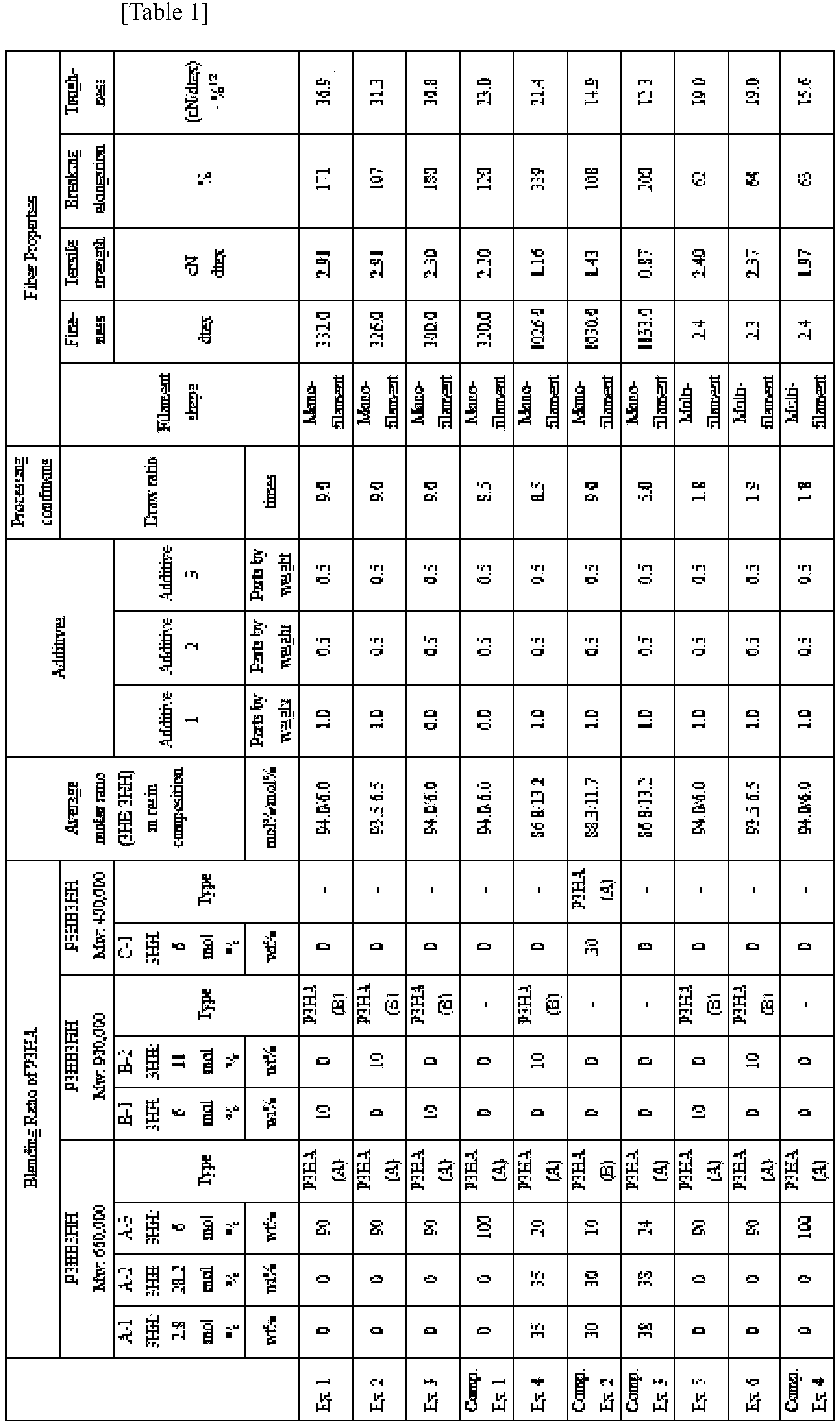

As shown in Table 1, in Examples 1 to 3 falling within the scope of the present invention, the fibers were fabricated, each having about the same single-filament fineness as the single-filament fineness of the fiber fabricated in Comparative Example 1, in which the P3HA (B) was not used. Examples 1 to 3 exhibited higher single-filament toughness than that of Comparative Example 1.

In the fiber fabricated from the resin composition for a poly(3-hydroxyalkanoate) fiber according to Example 4 falling within the scope of the present invention, the single-filament fineness was about the same as that of the fibers fabricated in Comparative Examples 2 and 3. In Comparative Example 2, the amount of the P3HA (A) used was smaller than that in Example 4. In Comparative Example 3, the P3HA (B) was not used. Example 4 exhibited higher single-filament toughness than that of Comparative Examples 2 and 3.

In the fibers fabricated from the resin compositions each for a poly(3-hydroxyalkanoate) fiber according to Examples 5 and 6 falling within the scope of the present invention, the single-filament fineness was about the same as that of the fiber fabricated in Comparative Example 4, in which the P3HA (B) was not used. Examples 5 and 6 exhibited higher single-filament toughness than that of Comparative Example 4.

Thus, it is understood that the present invention makes it possible to provide a resin composition for a poly(3-hydroxyalkanoate) fiber, the resin composition being intended for fabricating a poly(3-hydroxyalkanoate) resin-containing fiber having excellent toughness.

Regarding monofilaments, Examples 1 to 3 exhibited higher toughness than that of Example 4, in which the single-filament fineness of the fiber was about 1,000 dtex, which was relatively high.

## Claims

1. A poly(3-hydroxyalkanoate) fiber comprising a resin composition for a poly(3-hydroxyalkanoate) fiber, the resin composition including a poly(3-hydroxyalkanoate) resin (A) having a weight-average molecular weight ranging from 200,000 to 700,000 and a poly(3-hydroxyalkanoate) resin (B) having a weight-average molecular weight ranging from 400,000 to 1,400,000, wherein:
the weight-average molecular weight of the poly(3-hydroxyalkanoate) resin (B) is greater than the weight-average molecular weight of the poly(3-hydroxyalkanoate) resin (A) by at least 200,000; and
a content of the poly(3-hydroxyalkanoate) resin (A) is greater than a content of the poly(3-hydroxyalkanoate) resin (B).

2. The poly(3-hydroxyalkanoate) fiber according to claim 1, wherein a weight ratio of the content of the poly(3-hydroxyalkanoate) resin (A) to the content of the poly(3-hydroxyalkanoate) resin (B) is from 95/5 to 70/30.

3. The poly(3-hydroxyalkanoate) fiber according to claim 1 or 2, wherein the poly(3-hydroxyalkanoate) resin (A) and/or the poly(3-hydroxyalkanoate) resin (B) includes a 3-hydroxyalkanoic acid unit expressed by the following equation (1):
[-CHR-CH₂-CO-O-] (1)
(in the equation (1), R is an alkyl group represented by CₚH₂ₚ₊₁, and p is an integer from 1 to 15).

4. The poly(3-hydroxyalkanoate) fiber according to claim 3, wherein the poly(3-hydroxyalkanoate) resin (A) and/or the poly(3-hydroxyalkanoate) resin (B) is at least one selected from the group consisting of poly(3-hydroxybutyrate), poly(3-hydroxybutyrate-co-3-hydroxypropionate), poly(3-hydroxybutyrate-co-3-hydroxyvalerate), poly(3-hydroxybutyrate-co-3-hydroxyhexanoate), poly(3-hydroxybutyrate-co-3-hydroxyvalerate-co-3-hydroxyhexanoate), and poly(3-hydroxybutyrate-co-4-hydroxybutyrate).

5. The poly(3-hydroxyalkanoate) fiber according to claim 4, wherein the poly(3-hydroxyalkanoate) resin (A) and/or the poly(3-hydroxyalkanoate) resin (B) is poly(3-hydroxybutyrate-co-3-hydroxyhexanoate).

6. The poly(3-hydroxyalkanoate) fiber according to claim 1 or 2, wherein:
the resin composition for a poly(3-hydroxyalkanoate) fiber includes a 3-hydroxybutyrate unit and another hydroxyalkanoate unit; and
an average molar ratio of the 3-hydroxybutyrate unit/the other hydroxyalkanoate unit in the resin composition for a poly(3-hydroxyalkanoate) fiber is from 80/20 to 95/5 (mol%/mol%).

7. The poly(3-hydroxyalkanoate) fiber according to claim 1 or 2, wherein:
the poly(3-hydroxyalkanoate) resin (B) includes a 3-hydroxybutyrate unit and another hydroxyalkanoate unit; and
an average molar ratio of the 3-hydroxybutyrate unit/the other hydroxyalkanoate unit in the poly(3-hydroxyalkanoate) resin (B) is from 93/7 to 99/1 (mol%/mol%).

8. The poly(3-hydroxyalkanoate) fiber according to claim 1 or 2, wherein
the resin composition for a poly(3-hydroxyalkanoate) fiber includes pentaerythritol in an amount from 0.1 to 10 parts by weight per 100 parts by weight of the resin composition for a poly(3-hydroxyalkanoate) fiber.

9. A resin composition for a poly(3-hydroxyalkanoate) fiber, comprising:
a poly(3-hydroxyalkanoate) resin (A) having a weight-average molecular weight ranging from 200,000 to 700,000; and
a poly(3-hydroxyalkanoate) resin (B) having a weight-average molecular weight ranging from 400,000 to 1,400,000, wherein:
the weight-average molecular weight of the poly(3-hydroxyalkanoate) resin (B) is greater than the weight-average molecular weight of the poly(3-hydroxyalkanoate) resin (A) by at least 200,000; and
a content of the poly(3-hydroxyalkanoate) resin (A) is greater than a content of the poly(3-hydroxyalkanoate) resin (B).

10. The resin composition for a poly(3-hydroxyalkanoate) fiber, according to claim 9, wherein a weight ratio of the content of the poly(3-hydroxyalkanoate) resin (A) to the content of the poly(3-hydroxyalkanoate) resin (B) is from 95/5 to 70/30.

11. A method for producing a fiber by melt spinning, the method comprising the steps of:
(A) obtaining a raw filament by discharging a molten product of the resin composition for a poly(3-hydroxyalkanoate) fiber according to claim 9 or 10 through a discharge hole;
(B) cooling the raw filament; and
(C) obtaining the fiber by drawing the cooled raw filament.

12. The method for producing a fiber, according to claim 11, wherein a draw ratio in the step (C) is 5.0 times or greater.
